# EUROPÄISCHE PATENTSCHRIFT

(11) **EP 3 788 022 B1**
(45) Veröffentlichungstag und Bekanntmachung des Hinweises auf die Patenterteilung: **08.06.2022**
(21) Anmeldenummer: 19722567.5
(22) Anmeldetag: 02.05.2019
(51) Int. Cl.: C04B 35/628, C01B 21/068

(54) **AZOTIERTES SILICIUM-HALTIGES PULVER**
AZOTIZED SILICON-CONTAINING POWDER
POUDRE CONTENANT DU SILICIUM AZOTÉ

(30) Priorität: 04.05.2018 DE 102018110731
(43) Veröffentlichungstag der Anmeldung: 10.03.2021
(73) Patentinhaber: Alzchem Trostberg GmbH, 83308 Trostberg (DE)
(72) Erfinder: SANS, Jürgen, 83308 Trostberg (DE); HOISLBAUER, Christoph, 89979 Taching (DE); SCHROLL, Georg, 83365 Nussdorf (DE); KUCZYNSKI, Maciej, 83308 Taching (DE)
(74) Vertreter: Dey, Michael
(86) Internationale Anmeldenummer: PCT/EP2019/061303
(87) Internationale Veröffentlichungsnummer: WO 2019/211404

(56) Entgegenhaltungen:
- EP-A1- 2 376 375
- EP-B1- 2 376 375

## Beschreibung

Siliciumnitrid (Si₃N₄; CAS-Nr. 12033-89-5) ist eine chemische Verbindung, die als Bestandteil von technischen Werkstoffen eingesetzt wird. Wesentliche Anwendungsgebiete finden sich in der Keramik-Industrie als auch der Photovoltaik-Industrie. In der Photovoltaik-Industrie findet Siliciumnitrid zunehmende Bedeutung als Trennmittel bei der Herstellung sogenannter Ingots für multikristalline Siliciumsolarzellen. Die Anforderungen an das Siliciumnitrid für diese Anwendungen unterscheiden sich deutlich von denjenigen Anforderungen an Siliciumnitrid für das traditionelle Einsatzgebiet in der keramischen Industrie. Die Produkte zur Verwendung in der keramischen Industrie erfordern eine gute Formbarkeit verbunden mit guten Sintereigenschaften des Ausgangsmaterials.

Siliciumnitrid weist eine hervorragende Kombination von Werkstoffeigenschaften auf und ist damit bestens zur Herstellung von Keramiken geeignet. So ist Siliciumnitrid beispielsweise fast so leicht wie Siliciumkarbid (SiC), hat jedoch aufgrund seiner Gefügestruktur eine sehr gute Thermowechselbeständigkeit und ist aufgrund seiner Bruchzähigkeit unempfindlich gegen Stöße und Schläge.

Siliciumnitrid tritt in drei Modifikationen (alpha-Siliciumnitrid (α-Si₃N₄), beta-Siliciumnitrid (β-Si₃N₄) und gamma-Siliciumnitrid (γ-Si₃N₄)) auf, die sich in ihrer Kristallstruktur unterscheiden. Pulverförmiges Siliciumnitrid mit einem hohen Gehalt an alpha-Modifikation stellt ein technisch wichtiges Ausgangsmaterial zur Herstellung von keramischen Werkstoffen mit hoher Temperatur- und Korrosionsbeständigkeit sowie Festigkeit dar. Bei der Herstellung hochwertiger keramischer Werkstoffe wird üblicherweise pulverförmiges Siliciumnitrid mit einem hohen Gehalt an alpha-Modifikation unter Zusatz von Additiven bei hohen Temperaturen in beta-Siliciumnitrid umgewandelt. Diese Werkstoffe finden insbesondere Anwendung bei der Herstellung von Bauteilen, die starken Temperaturbelastungen ausgesetzt sind. So wird Siliciumnitrid insbesondere im Motoren- und Turbinenbau oder zur Herstellung von chemischen Apparaturen eingesetzt. In der metallurgischen Industrie ist Siliciumnitrid ein wichtiger Bestandteil von Gießrinnen, Pfannen, Abstichschnauzen sowie Schmelztiegeln etc.

Entsprechend dem Stand der Technik sind bereits eine Vielzahl an Verfahren zur Herstellung von Siliciumnitrid entwickelt worden.

So kann Siliciumnitrid beispielsweise durch Reaktion von Silicium und Stickstoff ohne weitere Zusätze in einem sogenannten Direktverfahren hergestellt werden. Aus der europäischen Patentschrift EP 377 132 B1 ist ein solches Direktverfahren bekannt, in dem in einer ersten Reaktionsstufe Silicium mit Stickstoff bei 1.000 bis 1.800 °C bis zu einem Stickstoffgehalt von 5 bis 25 Gew.-% umgesetzt und das teilazotierte Produkt in einer zweiten Reaktionsstufe bei 1.100 bis 1.600 °C in einem Gemisch aus Stickstoff und Inertgas vollazotiert wird. Mit Hilfe dieses Verfahrens lassen sich Reinheitsgrade von bis zu 99,8 % erzielen.

Eine Weiterentwicklung dieses Verfahrens wird mit der europäischen Patentschrift EP 2 376 375 B1 beschrieben, die ein Verfahren zur Herstellung von hochreinem Siliciumnitrid in zwei Schritten beschreibt. In dem Verfahren wird hochreines Silicium mit Stickstoff in einem Drehrohrofen mit einer ersten Temperaturzone von 1.150 bis 1.250 °C und mindestens einer weiteren Temperaturzone von 1.250 bis 1.350 °C umgesetzt. In einem weiteren Verfahrensschritt wird das teilazotierte Produkt in einem Kammer- oder Setzofen in Gegenwart eines Gasgemisches bestehend aus Argon, Stickstoff und ggf. Wasserstoff bei 1.100 bis 1.450 °C bis zur Beendigung der Stickstoffaufnahme vollazotiert. Mit Hilfe dieser Weiterentwicklung ist es möglich hochreines Siliciumnitrid mit einer Reinheit von mehr als 99,9 % herzustellen.

Besonders reines Siliciumnitrid weist einen Anteil an Silicium von bis zu 60,06 Gew.-% und einen Anteil an Stickstoff von bis zu 39,94 Gew.-% auf. Der Anteil an Verunreinigungen durch andere Metalle ist bei diesen reinen Produkten fast zu vernachlässigen und kann auf kleiner 0,002 Gew.-% beziffert werden. Technisches Siliciumnitrid kann einen Anteil an Silicium von ca. 59,5 bis 59,8 Gew.-% und einen Anteil an Stickstoff von ca. 38,5 % bis 39,5 Gew-% haben. An sonstigen Elementen ist Sauerstoff bis zu 0,5 Gew.-% sowie andere Metalle in Konzentrationen kleiner 0,1 Gew.-% enthalten. In jedem Fall weist technisches Siliciumnitrid einen Mindestgehalt von 38,0 Gew-% Stickstoff auf. Silicium-Stickstoff-Verbindungen mit einem Gehalt von weniger als 38 Gew.-% Stickstoff sind daher nicht als Siliciumnitrid zu bezeichnen.

Zudem ist mit der US-Patentschrift 9,337,375 B2 ein Material bestehend aus einem Kern, der u.a. aus Silicium, Siliciumcarbid oder Siliciumnitrid bestehen kann, einer diffusionsresistenten Schicht, die die äußere Oberfläche des Kerns bedeckt und die u.a. aus Silicium, Siliciumoxid oder einem Gemisch aus Siliciumnitrid und Siliciumdioxid bestehen kann, und einer Schicht, die die diffusionsresistente Schicht überdeckt und die aus Siliciumnitrid oder Bornitrid besteht, beschrieben. Wesentlich ist, dass dieses Material in seinen einzelnen Schichten aus chemisch mehr oder weniger reinen Stoffen oder Gemischen hiervon besteht. Dieses Material ermöglicht eine signifikante Reduzierung der sogenannten "red zone" und "yellow zone" in den Siliciumingots.

Der vorliegenden Erfindung liegt die Aufgabe zugrunde, ein Silicium-haltiges Pulver bereitzustellen, das für die Herstellung von Siliciumnitrid-Keramiken, insbesondere von Siliciumnitrid-Keramiken, die nach der Methode der Direktazotierung hergestellt werden, geeignet ist.

Gelöst wird diese Aufgabe durch ein Pulver gemäß Anspruch 1. Bevorzugte Ausführungsformen der Erfindung sind in den Unteransprüchen angegeben, die wahlweise miteinander kombiniert werden können.

Somit ist gemäß einer ersten Ausführung ein azotiertes Silicium-haltiges Pulver Gegenstand der vorliegenden Erfindung, das Partikel umfasst, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen, die Kerne einen Stickstoffgehalt von höchstens 10 Gew.-% (bezogen auf die Masse der Kerne), die Übergangsschichten einen Stickstoffgehalt von mehr als 10 Gew.-% und bis zu 25 Gew.-% (bezogen auf die Masse der Übergangsschichten) und die Deckschichten einen Stickstoffgehalt von mehr als 25 Gew.-% (bezogen auf die Masse der Deckschichten) aufweisen. Bevorzugt besteht das azotierte Silicium-haltige Pulver aus Partikeln, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen, die Kerne einen Stickstoffgehalt von höchstens 10 Gew.-% (bezogen auf die Masse der Kerne), die Übergangsschichten einen Stickstoffgehalt von mehr als 10 Gew.-% und bis zu 25 Gew.-% (bezogen auf die Masse der Übergangsschichten) und die Deckschichten einen Stickstoffgehalt von mehr als 25 Gew.-% (bezogen auf die Masse der Deckschichten) aufweisen.

Erfindungsgemäß umfasst das azotierte Siliciumhaltige Pulver damit Partikel, die in jeder Schicht einen mehr oder minder großen Anteil an Stickstoff aufweisen. Hervorzuheben ist hierbei, dass die Partikel des erfindungsgemäßen Pulvers einstückige Partikel aus azotiertem Silicium sind, die in den unterschiedlichen Schichten, nämlich dem Kern, der Übergangsschicht und der Deckschicht, mit unterschiedlichen Gehalten an Stickstoff assoziiert vorliegt; d.h., dass der Stickstoff in (mehr oder weniger) festen Bindungen mit dem Silicium assoziiert vorliegt. Somit umfassen sowohl die Kerne als auch die Übergangsschichten als auch die Deckschichten jeweils Silicium und Stickstoff. In jedem Fall besteht jedoch weder der Kern, noch die Übergangsschicht, noch die Deckschicht weder ausschließlich aus Siliciumnitrid noch ausschließlich aus Silicium noch aus einem Gemisch aus Silicium und Siliciumnitrid.

Erfindungsgemäß bevorzugt ist ein azotiertes Silicium-haltiges Pulver umfassend Partikel deren Kerne einen Stickstoffgehalt von höchstens 10 Gew.-%, insbesondere von höchstens 8 Gew.-%, bevorzugt von höchstens 5 Gew.-% und besonders bevorzugt von höchstens 3 Gew.-% (bezogen auf die Masse der Kerne) aufweisen und/oder deren Partikel Kerne umfassen, die einen Stickstoffgehalt von mindestens 0,1 Gew.-%, bevorzugt mindestens 0,5 Gew.-%, bevorzugt mindestens 1 Gew.-% und besonders bevorzugt von mindestens 2 Gew.-% (bezogen auf die Masse der Kerne) aufweisen. Entsprechend weisen die Partikel bevorzugt Kerne auf, die einen Siliciumgehalt von höchstens 99,9 Gew.-%, bevorzugt von höchstens 99,5 Gew.-%, mehr bevorzugt von höchstens 99 Gew.-% und besonders bevorzugt von höchstens 98 Gew.-% (bezogen auf die Masse der Kerne) aufweisen und/oder Kerne, die einen Siliciumgehalt von mindestens 90 Gew.-%, insbesondere von mindestens 92 Gew.-%, bevorzugt von mindestens 95 Gew.-% und besonders bevorzugt von mindestens 97 Gew.-% umfassen.

Die Übergangsschichten der Partikel des erfindungsgemäßen azotierten Silicium-haltigen Pulvers weisen vorzugsweise einen Stickstoffgehalt von mehr als 10 Gew.-%, bevorzugt mehr als 12 Gew.-% und bis zu 25 Gew.-%, bevorzugt bis zu 23 Gew.-% (bezogen auf die Masse der Übergangsschichten) und entsprechend bevorzugt einen Siliciumgehalt von mindestens 75 Gew.-%, bevorzugt von mindestens 77 Gew.-% und bis zu kleiner als 90 Gew.-%, bevorzugt bis zu kleiner als 88 Gew.-% (bezogen auf die Masse der Übergangsschichten) auf.

Weiterhin bevorzugt weisen die Partikel der erfindungsgemäßen azotierten Silicium-haltigen Pulver Deckschichten auf, die einen Stickstoffgehalt von mehr als 25 Gew.-%, bevorzugt von mehr als 27 Gew.-%, mehr bevorzugt von mehr als 32 Gew.-% und noch mehr bevorzugt von mehr als 35 Gew.-% auf (bezogen auf die Masse der Deckschichten) und/oder deren Partikel Deckschichten aufweisen, die einen Stickstoffgehalt von höchstens 37 Gew.-% (bezogen auf die Masse der Deckschichten) aufweisen. Entsprechend weisen die Deckschichten der Partikel der erfindungsgemäßen azotierten Silicium-haltigen Pulver vorzugsweise einen Siliciumgehalt von bis zu kleiner als 75 Gew.-%, mehr bevorzugt von bis zu kleiner als 73 Gew.-%, noch mehr bevorzugt von bis zu kleiner als 68 Gew.-% und am meisten bevorzugt von bis zu kleiner als 65 Gew.-% auf und/oder einen Siliciumgehalt von mindestens 63 Gew.-%.

Weiterhin ist hervorzuheben, dass weder die Deckschicht noch die Übergangsschicht eine diffusionsresistente Schicht bilden. Es ist vielmehr der Fall, dass diese Schichten für Gase barrierefreie somit diffusionsoffene Schichten sind. Diese diffusionsoffenen Schichten sind unabhängig von ihrer Ausgestaltung als teilweise überdeckende oder ummantelnde Schicht oder als vollständig überdeckende oder ummantelnde Schicht für Gase, insbesondere Stickstoff, durchdringbar.

Überraschenderweise hat sich herausgestellt, dass azotierte Silicium-haltige Pulver gemäß der vorliegenden Erfindung besonders gut zur Herstellung von Siliciumnitrid-Keramiken geeignet sind. Diese azotierten Silicium-haltige Pulver lassen sich in den Verfahren zur Herstellung von Siliciumnitrid-Keramiken weitgehend analog zu üblichen Siliciumnitrid-Pulvern oder Siliciumpulvern verarbeiten.

Solch ein Verfahren zur Herstellung einer Siliciumnitrid-Keramik umfasst insbesondere die Schritte
i) Bereitstellen eines azotierten Silicium-haltigen Pulvers wie hierin beschrieben und
ii) Umsetzen des azotierten Silicium-haltigen Pulvers mit Stickstoff zu Siliciumnitrid. Bevorzugt werden zur Herstellung einer Siliciumnitrid-Keramik zusätzlich Sinteradditive zugegeben. Die Umsetzung erfolgt vorzugsweise bei geeigneten Sintertemperaturen.

Zur Herstellung von Siliciumnitrid-Keramiken existieren zwei Methoden. Bei der ersten Methode wird ein Siliciumnitrid-Pulver mit einem hohen alpha-Gehalt mit Sinteradditiven (üblicherweise Y₂O₃, Al₂O₃, MgO) vermischt und die Mischung auf verschiedenste Weisen in die endkonturnahe Form gebracht und anschließend bei Temperaturen über 1.600 °C gebrannt. Hierbei wandelt sich das alpha-Siliciumnitrid, aktiviert durch die Sinteradditive, in beta-Siliciumnitrid um. Bei der zweiten Methode wird Silicium-Pulver in die endkonturnahe Form gebracht und anschließend mit Stickstoff in einer exothermen Reaktion zur Siliciumnitrid-Keramik umgesetzt.

Die erste Methode ist aufwendiger, jedoch werden bessere Festigkeiten erhalten, da die Phasenumwandlung nur eine geringe Exothermie liefert, die zu Spannungen führen könnte. Die zweite Methode ist weniger aufwendig jedoch mit dem Nachteil verbunden, dass die Exothermie der Nitridierung sehr hoch ist. Somit können große Volumenbauteile nicht oder nur unter Inkaufnahme einer geringeren Festigkeit hergestellt werden.

Überraschenderweise hat sich gezeigt, dass bei Verwendung des azotierten Silicium-haltigen Pulvers gemäß der zweiten Methode auch große Volumenbauteile mit guter Festigkeit hergestellt werden können. Ohne an die Theorie gebunden zu sein wird angenommen, dass bei der Erfindung das reaktive nur gering azotierte Silicium im Inneren der Partikel durch die partiell schützende Hülle aus hoch azotiertem Silicium derart geschützt ist, dass die Reaktionswärme nur nach und nach frei wird und somit keine Spannungen im Bauteil erzeugt werden, wodurch letztendlich ein Bauteil mit höherer Festigkeit resultiert. Wichtig gemäß der Erfindung ist, dass das gering azotierte Silicium im Innern der Partikel nicht vollständig abgeschirmt ist, sondern entweder durch eine poröse Struktur nur partiell bedeckt oder mindestens durch Diffusionsvorgänge dem Reaktionspartner Stickstoff zur Verfügung steht.

Hierbei hat sich weiterhin überraschend herausgestellt, dass azotierte Silicium-haltige Pulver, die Partikel umfassen, die einen Schichtaufbau bestehend aus einem Kern, einer Übergangsschicht, insbesondere eine für Gase diffusionsoffene Übergangsschicht, die den Kern zumindest teilweise überdeckt oder ummantelt, und einer Deckschicht, die die Übergangsschicht zumindest teilweise überdeckt oder ummantelt, wobei der Gesamt-Stickstoffgehalt des azotierten Silicium-haltigen Pulvers mindestens 2 Gew.-% beträgt, besonders gut geeignet sind. Dies war in keinster Weise vorhersehbar.

Somit ist gemäß einer bevorzugten Ausführung ein azotiertes Silicium-haltiges Pulver Gegenstand der vorliegenden Erfindung, das einen Gesamt-Stickstoffgehalt von mindestens 2 Gew.-% (bezogen auf die Masse des Pulvers) aufweist. Besonders bevorzugt sind hierbei solche Silicium-haltige Pulver, die einen Gesamt-Stickstoffgehalt von mindestens 4 Gew.-% und weiter bevorzugt von mindestens 6 Gew.-% (bezogen auf die Masse des Pulvers) aufweist. Gleichzeitig oder unabhängig hiervon sind solche azotierten Silicium-haltigen Pulver bevorzugt, die einen Gesamt-Stickstoffgehalt von höchstens 25 Gew.-%, insbesondere von höchstens 20 Gew.-% und ganz besonders bevorzugt von höchstens 15 Gew.-% (bezogen auf die Masse des Pulvers) aufweist.

Weiterhin bevorzugt sind azotierte Silicium-haltige Pulver, die Partikel umfassen oder enthalten, die jeweils aus einem Kern, einer Übergangsschicht, insbesondere eine für Gase diffusionsoffene Übergangsschicht, die den Kern zumindest teilweise überdeckt oder ummantelt, und einer Deckschicht, die die Übergangsschicht zumindest teilweise überdeckt oder ummantelt, wobei der Gesamt-Stickstoffgehalt des azotierten Silicium-haltigen Pulvers mindestens 2 Gew.-% beträgt, und wobei der Stickstoffgehalt von der Deckschicht zum Kern graduell abnimmt.

Weiterhin hat sich gezeigt, dass neben dem Stickstoffgehalt (Mindestgehalt von 2 Gew.-%) auch der Gehalt an Silicium einen Einfluss bei der Herstellung von Keramiken hat. So sollte der Gesamtgehalt an Silicium in dem azotierten Pulver mindestens 73 Gew.-% (bezogen auf die Masse des Pulvers) aufweisen. Besonders bevorzugt sind hierbei solche Silicium-haltigen Pulver, die einen Gesamt-Siliciumgehalt von mindestens 75 Gew.-%, bevorzugt mindestens 78 Gew.-% und weiter bevorzugt von mindestens 83 Gew.-% (bezogen auf die Masse des Pulvers) aufweisen. Gleichzeitig oder unabhängig hiervon sind solche azotierten Silicium-haltigen Pulver bevorzugt, die einen Gesamt-Siliciumgehalt von höchstens 98 Gew.-%, insbesondere von höchstens 96 Gew.-% und ganz besonders bevorzugt von höchstens 94 Gew.-% (bezogen auf die Masse des Pulvers) aufweisen.

Gemäß der vorliegenden Erfindung umfassen oder enthalten erfindungsgemäße azotierte Silicium-haltige Pulver Partikel, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen. Diese Obergrenze von 3.000 µm hat sich als wesentlich für den Einsatz zur Herstellung von Siliciumnitrid-Keramiken gezeigt. Sollten nämlich Pulver eingesetzt werden, deren Partikel eine Größe von 3.000 µm überschreiten, so wird bei dem resultierenden keramischen Bauteil keine ausreichende Festigkeit erzielt.

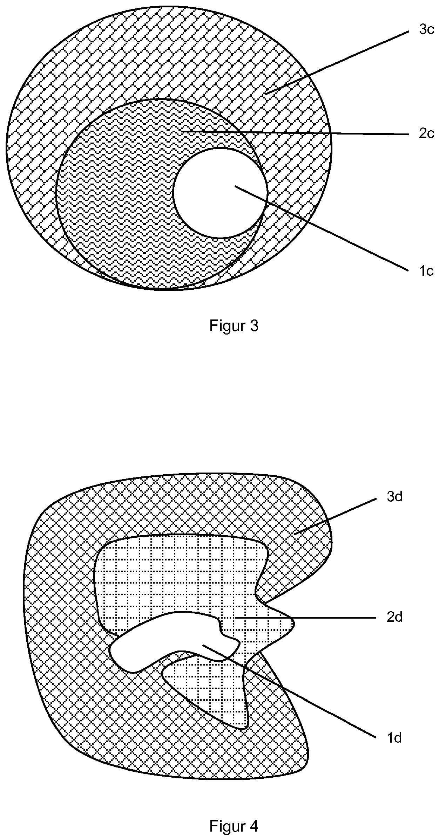

Die Partikelgröße kann bestimmt werden durch Sieben mit Hilfe eines Siebturmes unter Verwendung von Sieben mit entsprechenden Maschenweiten. So kann die Partikelgröße z.B. gemäß der DIN Norm DIN 66165 bestimmt werden. Die Partikelgröße wird dabei definiert als Sieböffnungsweite, also als Maschenweite eines Siebs, durch die die Teilchen gerade noch hindurchpassen. Dadurch kann die Partikelgröße sowohl für sphärische Partikel aber auch für unregelmäßige Partikel (wie beispielsweise in Figur 4 gezeigt) bestimmt und angegeben werden. Neben der Angabe der Maschenweite eines Siebs in µm ist auch eine Angabe in der Einheit Mesh möglich. Dabei entspricht beispielsweise 6 Mesh =̂ 3360 µm, 7 Mesh =̂ 2830 µm, 10 Mesh =̂ 2000 µm, 20 Mesh =̂ 841 µm, 35 Mesh =̂ 500 µm und 100 Mesh =̂ 149 µm.

Besonders bevorzugt sind azotierte Silicium-haltige Pulver deren Partikel, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, eine Partikelgröße von höchstens 2.000 µm, insbesondere von höchstens 1.500 µm, besonders bevorzugt von höchstens 1.100 µm und ganz besonders bevorzugt von höchstens 800 µm aufweisen.

Auch hinsichtlich der Untergrenze für die Größe der Partikel hat sich gezeigt, dass die Partikel bzw. der Hauptfraktion der Partikel eine Mindestgröße nicht unterschreiten sollte. So hat sich gezeigt, dass Pulver deren Partikel bzw. deren Hauptfraktion eine Partikelgröße von mindestens 50 µm aufweisen besonders gut handhabbar sind und in den weitgehend automatisierten Verfahren zur Herstellung von Siliciumnitrid-Keramiken ohne Reibungsverluste eingesetzt werden können.

Besonders bevorzugt sind azotierte Silicium-haltige Pulver deren Partikel, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, eine Partikelgröße von mindestens 100 µm, bevorzugt mindestens 200 µm und besonders bevorzugt von mindestens 300 µm aufweisen.

Gemäß einer besonders bevorzugten Ausführung der Erfindung ist daher vorgesehen, dass die azotierten Silicium-haltigen Pulver Partikel umfassen oder enthalten, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von mindestens 50 µm und höchstens 3.000 µm aufweisen.

Alternativ kann jedoch auch vorgesehen sein, dass das azotierte Silicium-haltige Pulver gemäß der vorliegenden Erfindung 0 bis 20 Gew.-% Partikel mit einer Partikelgröße von weniger als 200 µm, 60 bis 100 Gew.-% Partikel mit einer Partikelgröße von 200 bis 800 µm und 0 bis 20 Gew.-% Partikel mit einer Partikelgröße von mehr als 800 µm umfasst (jeweils bezogen auf die Masse des Pulvers).

Somit ist gemäß einer weiter bevorzugten Ausführung auch ein azotiertes Silicium-haltiges Pulver Gegenstand der vorliegenden Erfindung, das Partikel umfasst oder enthält, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen und wobei das Pulver 0 bis 20 Gew.-% Partikel mit einer Partikelgröße von weniger als 200 µm, 60 bis 100 Gew.-% Partikel mit einer Partikelgröße von 200 bis 800 µm und 0 bis 20 Gew.-% Partikel mit einer Partikelgröße von mehr als 800 µm umfasst (jeweils bezogen auf die Masse des Pulvers). Besonders bevorzugt sind solche Pulver, die Partikel mit eine Partikelgröße von höchstens 3.000 µm aufweisen, wobei das Pulver 0 bis 15 Gew.-% Partikel mit einer Partikelgröße von weniger als 200 µm, 70 bis 100 Gew.-% Partikel mit einer Partikelgröße von 200 bis 800 µm und 0 bis 15 Gew.-% Partikel mit einer Partikelgröße von mehr als 800 µm umfasst (jeweils bezogen auf die Masse des Pulvers). Weiter bevorzugt sind solche Pulver, die Partikel mit eine Partikelgröße von höchstens 3.000 µm aufweisen, wobei das Pulver 0 bis 10 Gew.-% Partikel mit einer Partikelgröße von weniger als 200 µm, 80 bis 100 Gew.-% Partikel mit einer Partikelgröße von 200 bis 800 µm und 0 bis 10 Gew.-% Partikel mit einer Partikelgröße von mehr als 800 µm umfasst (jeweils bezogen auf die Masse des Pulvers). Ganz besonders bevorzugt sind solche Pulver, die Partikel mit einer Partikelgröße von höchstens 3.000 µm aufweisen, wobei das Pulver 0 bis 6 Gew.-% Partikel mit einer Partikelgröße von weniger als 200 µm, 88 bis 100 Gew.-% Partikel mit einer Partikelgröße von 200 bis 800 µm und 0 bis 6 Gew.-% Partikel mit einer Partikelgröße von mehr als 800 µm umfasst (jeweils bezogen auf die Masse des Pulvers).

Weiterhin bevorzugt sind auch azotierte Silicium-haltige Pulver, die eine Schüttdichte von 600 bis 1.800 g/l, insbesondere eine Schüttdichte von 750 bis 1.500 g/l, und ganz besonders bevorzugt von 900 bis 1.200 g/l aufweisen.

Diese azotierten Silicium-haltigen Pulver lassen sich besonders gut mit anderen Materialien zur Herstellung von Siliciumnitrid-Keramiken vermischen.

Gemäß der vorliegenden Erfindung umfasst oder enthält ein azotiertes Silicium-haltiges Pulver Partikel, die einen Schichtaufbau aufweisen, wobei jede Schicht einen Stickstoffgehalt aufweist, der verschieden ist von den Stickstoffgehalten der jeweils anderen Schichten. Erfindungswesentlich umfasst oder enthält das azotierte Silicium-haltige Pulver Partikel, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Kerne einen Stickstoffgehalt von höchstens 10 Gew.-% (bezogen auf die Masse der Kerne), die Übergangsschichten einen Stickstoffgehalt von mehr als 10 bis 25 Gew.-% (bezogen auf die Masse der Übergangsschichten) und die Deckschichten einen Stickstoffgehalt von mehr als 25 Gew.-% (bezogen auf die Masse der Deckschichten) aufweisen.

Wie bereits ausgeführt, können solche Pulver besonders vorteilhaft zur Herstellung von Siliciumnitrid-Keramiken eingesetzt werden. Besonders vorteilhaft können dabei azotierte Silicium-haltige Pulver eingesetzt werden, deren Partikel Kerne aufweisen, die einen Stickstoffgehalt von höchstens 8 Gew.-%, bevorzugt von höchstens 5 Gew.-% und besonders bevorzugt von höchstens 3 Gew.-% (bezogen auf die Masse der Kerne) aufweisen und/ oder deren Partikel Kerne umfassen, die einen Stickstoffgehalt von mindestens 0,1 Gew.-%, bevorzugt mindestens 0,5 Gew.-%, bevorzugt mindestens 1 Gew.-% und besonders bevorzugt von mindestens 2 Gew.-% (bezogen auf die Masse der Kerne) aufweisen. Ganz besonders bevorzugt sind daher azotierte Silicium-haltige Pulver, deren Partikel Kerne aufweisen, die nicht aus Silicium bestehen.

Gemäß einer alternativen Ausführung ist damit auch ein azotiertes Silicium-haltiges Pulver Gegenstand der vorliegenden Erfindung, das Partikel umfasst oder enthält, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen und die Kerne einen Stickstoffgehalt von mehr als 0,5 Gew.-% und höchstens 10 Gew.-% (bezogen auf die Masse der Kerne) aufweisen.

Weiterhin können gemäß der vorliegenden Erfindung besonders vorteilhaft solche azotierten Silicium-haltigen Pulver eingesetzt werden, deren Partikel Deckschichten aufweisen, die einen Stickstoffgehalt von mehr als 27 Gew.-%, bevorzugt von mehr als 32 Gew.-% und bevorzugt von mehr als 35 Gew.-% aufweisen (bezogen auf die Masse der Deckschichten) und/ oder deren Partikel Deckschichten aufweisen, die einen Stickstoffgehalt von höchstens 37 Gew.-% (bezogen auf die Masse der Deckschichten) aufweisen. Besonders bevorzugt sind daher azotierte Silicium-haltige Pulver, deren Partikel Deckschichten aufweisen, die nicht aus Siliciumnitrid bestehen.

Gemäß einer alternativen Ausführung ist damit auch ein azotiertes Silicium-haltiges Pulver Gegenstand der vorliegenden Erfindung, das Partikel umfasst oder enthält, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen und die Deckschichten einen Stickstoffgehalt von mehr als 25 Gew.-% und höchstens 37 Gew.-% (bezogen auf die Masse der Deckschichten) aufweisen.

Weiterhin können gemäß der vorliegenden Erfindung besonders vorteilhaft solche azotierten Silicium-haltigen Pulver eingesetzt werden, deren Partikel Übergangsschichten aufweisen, die einen Stickstoffgehalt von mehr als 10 und bis zu 25 Gew.-% (bezogen auf die Masse der Übergangsschichten) aufweisen und/ oder deren Stickstoffgehalt von innen (von der Grenzschicht zum Kern) nach außen (zur Grenzschicht zur Deckschicht) graduell zunimmt.

Wie oben bereits ausgeführt, sind sowohl die Übergangsschicht als auch die Deckschicht für Gase, insbesondere für Stickstoff, durchlässig. Die Durchlässigkeit für Gase ist dabei nicht an die Ausgestaltung der Schichten gebunden. Somit sind gemäß der vorliegenden Erfindung azotierte Silicium-haltige Pulver bevorzugt, deren Partikel für Gase, insbesondere Stickstoff, diffusionsoffene Übergangsschichten und für Gase, insbesondere Stickstoff, diffusionsoffene Deckschichten aufweisen.

Eine teilweise Überdeckung oder Ummantelung, wie hierin beschrieben, bedeutet dabei insbesondere, dass mindestens 10 %, mehr bevorzugt mindestens 20 %, noch mehr bevorzugt mindestens 30 % und insbesondere mindestens 40 % der Oberfläche des Kerns durch die Übergangsschicht bzw. der Oberfläche der Übergangsschicht durch die Deckschicht überdeckt oder ummantelt sind. Mehr bevorzugt bedeutet eine teilweise Überdeckung der Ummantelung, dass mindestens 50 %, insbesondere mindestens 60 %, bevorzugt mindestens 70 %, noch mehr bevorzugt mindestens 80 % und besonders bevorzugt mindestens 90 % der Oberfläche des Kerns durch die Übergangsschicht bzw. der Oberfläche der Übergangsschicht durch eine Deckschicht überdeckt oder ummantelt sind.

Ganz besonders werden azotierte Silicium-haltige Pulver bevorzugt, deren Partikel für Gase, insbesondere Stickstoff, diffusionsoffene Übergangsschichten und für Gase, insbesondere Stickstoff, diffusionsoffene Deckschichten aufweisen, wobei die Übergangsschichten die Kerne vollständig überdecken oder ummanteln und/ oder die Deckschichten die Übergangsschichten vollständig überdecken oder ummanteln.

Somit ist von der vorliegenden Erfindung auch ein azotiertes Silicium-haltiges Pulver umfasst, das Partikel umfasst, die jeweils aus einem Kern, einer für Gase, insbesondere für Stickstoff, diffusionsoffene Übergangsschicht, die den Kern zumindest teilweise überdeckt oder ummantelt, insbesondere vollständig überdeckt oder ummantelt, und einer für Gase, insbesondere für Stickstoff, diffusionsoffene Deckschicht, die die Übergangsschicht zumindest teilweise überdeckt oder ummantelt, insbesondere vollständig überdeckt oder ummantelt, bestehen, wobei die Partikel des Pulvers eine Partikelgröße von höchstens 3.000 µm aufweisen, die Kerne einen Stickstoffgehalt von höchstens 10 Gew.-% (bezogen auf die Masse der Kerne), die Übergangsschichten einen Stickstoffgehalt von mehr als 10 bis 25 Gew.-% (bezogen auf die Masse der Übergangsschichten) und die Deckschichten einen Stickstoffgehalt von mehr als 25 Gew.-% (bezogen auf die Masse der Deckschichten) aufweisen.

Gemäß einer besonders bevorzugten Ausführung der vorliegenden Erfindung weist das azotierte Silicium-haltiges Pulver einen Sauerstoffgehalt weniger als 2 Gew.-%, bevorzugt weniger als 1 Gew.-%, bevorzugt weniger als 0,5 Gew.-% (bezogen auf die Masse des Pulvers) auf.

Die Form der azotierten Silicium-Partikel kann weitgehend kugelförmig oder weitgehend zylindrisch oder weitgehend pyramidenförmig oder weitgehend unregelmäßig gestaltet sein oder es können Mischungen hiervon vorliegen.

Gemäß einer weiter bevorzugten Ausführung der vorliegenden Erfindung umfasst das azotierte Silicium-haltiges Pulver kein Siliciumdioxid, Siliciumoxinitrid, Siliciumcarbid oder Mischungen hiervon.

Gemäß der vorliegenden Erfindung wird zur Bestimmung der Gehalte an Stickstoff und Silicium innerhalb der jeweiligen Schicht die Ausdehnung der Schicht nicht über ein Längenmaß sondern über ein Gewichtsmaß bestimmt (vgl. Beispiele). Hierbei werden die Kerne der Partikel derart bestimmt, dass der Massenanteil der Kerne des Pulvers 10 bis 90 Gew.-%, bevorzugt 40 bis 75 Gew.-%, (bezogen auf die Masse des Pulvers) beträgt. Weiterhin werden die Übergangsschichten des Pulvers derart bestimmt, dass der Massenanteil der Übergangsschichten des Pulvers 9,5 bis 89,5 Gew.-%, bevorzugt 24,5 bis 59,5 Gew.-%, (bezogen auf die Masse des Pulvers) beträgt. Letztendlich werden die Deckschichten des Pulvers derart bestimmt, dass der Massenanteil der Deckschichten des Pulvers 0,5 bis 40 Gew.-%, bevorzugt 0,5 bis 5 Gew.-%, (bezogen auf die Masse des Pulvers) beträgt.

Somit ist gemäß einer ganz besonders bevorzugten Ausführung auch ein azotiertes Silicium-haltiges Pulver Gegenstand der vorliegenden Erfindung, das Partikel umfasst oder enthält, deren Massenanteil an Kernen 10 bis 90 Gew.-%, bevorzugt 40 bis 75 Gew.-%, (bezogen auf die Masse des Pulvers) beträgt und/ oder der Massenanteil an Übergangsschichten 9,5 bis 89,5 Gew.-%, bevorzugt 24,5 bis 59,5 Gew.-%, (bezogen auf die Masse des Pulvers) beträgt und/ oder der Massenanteil an Deckschichten 0,5 bis 40 Gew.-%, bevorzugt 0,5 bis 5 Gew.-%, (bezogen auf die Masse des Pulvers) beträgt.

Somit ist von der vorliegenden Erfindung auch ein azotiertes Silicium-haltiges Pulver umfasst, das Partikel umfasst, die jeweils aus einem Kern, einer für Gase, insbesondere für Stickstoff, diffusionsoffene Übergangsschicht, die den Kern zumindest teilweise überdeckt oder ummantelt, insbesondere vollständig überdeckt oder ummantelt, und einer für Gase, insbesondere für Stickstoff, diffusionsoffene Deckschicht, die die Übergangsschicht zumindest teilweise überdeckt oder ummantelt, insbesondere vollständig überdeckt oder ummantelt, bestehen, wobei die Partikel des Pulvers eine Partikelgröße von höchstens 3.000 µm aufweisen, die Kerne einen Stickstoffgehalt von höchstens 10 Gew.-% (bezogen auf die Masse der Kerne), die Übergangsschichten einen Stickstoffgehalt von mehr als 10 bis 25 Gew.-% (bezogen auf die Masse der Übergangsschichten) und die Deckschichten einen Stickstoffgehalt von mehr als 25 Gew.-% (bezogen auf die Masse der Deckschichten) aufweisen, wobei Massenanteil an Kernen 10 bis 90 Gew.-%, bevorzugt 40 bis 75 Gew.-%, (bezogen auf die Masse des Pulvers) beträgt und/ oder der Massenanteil an Übergangsschichten 9,5 bis 89,5 Gew.-%, bevorzugt 24,5 bis 59,5 Gew.-%, (bezogen auf die Masse des Pulvers) beträgt und/ oder der Massenanteil an Deckschichten 0,5 bis 40 Gew.-%, bevorzugt 0,5 bis 5 Gew.-%, (bezogen auf die Masse des Pulvers) beträgt.

Im Folgenden wird die vorliegende Erfindung anhand von Zeichnungen und zugehörigen Beispielen näher erläutert. Hierbei zeigt
- Figur 1:: eine schematische Ansicht einer annähernd kugelförmigen Partikel gemäß Erfindung im Querschnitt
- Figuren 2 bis 4:: jeweils eine schematische Ansicht einer alternativen Partikel gemäß Erfindung im Querschnitt

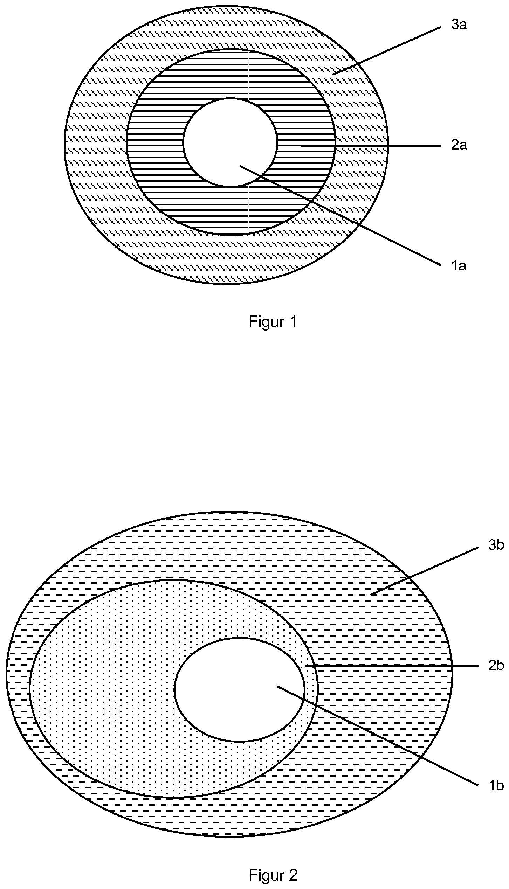

In Figur 1 ist ein schematischer Aufbau einer Partikel, bestehend aus einem Kern (1a), einer den Kern vollständig überdeckenden oder ummantelnden Übergangsschicht (2a) und einer die Übergangsschicht (2a) vollständig überdeckenden oder ummantelnden Deckschicht (3a) gezeigt.

In Figur 2 ist ein schematischer Aufbau einer alternativen Partikel im Querschnitt senkrecht zur Längsachse der Partikel gezeigt. Die Partikel besteht aus einem Kern (1b), einer den Kern vollständig ummantelnden Übergangsschicht (2b) und einer die Übergangsschicht (2b) vollständig ummantelnden Deckschicht (3b). Im Unterschied zu der mit Figur 1 dargestellten Partikel sind sowohl jeweils die Übergangsschicht (2b) als auch die Deckschicht (3b) unterschiedlich dick, d.h. die Schichten überdecken oder ummanteln den Kern (1b) bzw. die Übergangsschicht (2b) vollständig, jedoch über die jeweilige ummantelte Fläche mit unterschiedlichen Schichtdicken.

In Figur 3 ist ein schematischer Aufbau einer alternativen, annähernd kugelförmigen Partikel, bestehend aus einem Kern (1c), einer den Kern teilweise überdeckenden oder ummantelnden Übergangsschicht (2c) und einer die Übergangsschicht (2c) teilweise überdeckenden oder ummantelnden Deckschicht (3c) gezeigt. Im Unterschied zu der mit Figur 1 dargestellten Partikel sind sowohl jeweils die Übergangsschicht (2c) als auch die Deckschicht (3c) unterschiedlich dick, d.h. beide Schichten zusammen ummanteln den Kern (1c) vollständig.

In Figur 4 ist ein schematischer Aufbau einer alternativen, vollkommen unsymmetrischen Partikel gezeigt. Die Partikel besteht aus einem Kern (1d), einer den Kern teilweise ummantelnden Übergangsschicht (2d) und einer die Übergangsschicht (2d) teilweise ummantelnden Deckschicht (3d). Im Unterschied zu der mit Figur 1 dargestellten Partikel sind sowohl jeweils die Übergangsschicht (2d) als auch die Deckschicht (3d) unterschiedlich dick, wobei die Übergangsschicht (2d) und die Deckschicht (3d) zusammen den Kern (1d) vollständig überdecken oder ummanteln.

Ein Pulver umfassend Partikel gemäß Figur 1 bis 4 kann gemäß der folgenden Beispiele hergestellt werden.

### Beispiele

### Beispiel 1

### Herstellung azotiertes Silicium-haltiges Pulver

Polykristallines Silicium (Verunreinigung Metalle je kleiner 10 ppm, Partikelgröße von 0,2 bis 0,8 mm; 11,2 kg) wurden in einem Hubherdofen in einer Schütthöhe von maximal 6 mm unter Argonatmosphäre auf 1.250 °C bei 1,08 bar Ar erhitzt. Sobald die Temperatur erreicht war, wurde Stickstoff zugefügt, bis ein Druck von 1,2 bar im Ofen erreicht war. Sobald der Druck im System auf 1,1 bar abgesunken war, wurde vom System wieder automatisch der Druck auf 1,2 mit Stickstoff erhöht. Nach 72 Stunden wurde der Hubherdofen ausgeschaltet und nach Abkühlen das Produkt entnommen. Das Produkt wurde im ersten Schritt grob vorgebrochen (Spaltbreite Brecher: 5 mm) und im zweiten Schritt mit einer Spaltbreite (1 mm) gebrochen. Aus dem erhaltenen Produkt wurde eine Fraktion 1 mit einer Partikelgröße kleiner 0,2 mm und eine Fraktion 2 mit einer Partikelgröße 0,2 bis 0,8 mm und eine Fraktion 3 mit einer Partikelgröße größer 0,8 mm ausgesiebt. 72 % von der erhaltenen Menge nach dem Brecher mit der Spaltbreite 1 mm befinden sich nach dem Sieben in Fraktion 2 wieder. Für die weiteren Versuche wurde Fraktion 2 verwendet. Fraktion 2 wies einen Gesamt-Stickstoff-Gehalt von 9,6 % und einen Gesamt-Silicium-Gehalt von 89,8 % auf. Der Sauerstoffgehalt betrug 0,4 %.

### Bestimmung der Korngrößen des erfindungsgemäßen Pulvers

Die Korngrößenfraktionen wurden unter Verwendung eines Siebturmes mit automatischer Rüttelplatte und einer Siebzeit von 20 min durchgeführt. Das oberste Sieb wurde mit einer Schütthöhe zwischen 3 bis 5 mm an zu siebendem Material beaufschlagt.

### Bestimmung des Stickstoff- und Silicium-Gehalts in dem erfindungsgemäßen Pulver und der jeweiligen Schichten sowie Kerne des Pulvers

Stickstoff wurde mit Hilfe eines N-Analysators nach der Methode der Trägergasheißextraktion [Leco ON736-HMC]: Si mittels Röntgenfluoreszensanalyse [Bruker S2 Puma] bestimmt.

200 g Material der Siebfraktion 0,2 bis 0,8 mm (entspricht Fraktion 2) wurde in eine Heubachapparatur gegeben und im ersten Durchgang 15 min, im zweiten Durchgang 60 min und im dritten Durchgang 120 min bei 60 UPM behandelt. Das jeweils im Sammelbehälter abgetrennte Material wurde entsprechend als erstes Umhüllung, zweite Umhüllung und dritte Umhüllung bezeichnet.

Der Rückstand aus der Heubachapparatur wurde in einem Mörser dreimal je 5 min behandelt und jeweils die Fraktion kleiner 0,16 mm ausgesiebt, gewogen und der Stickstoff-Gehalt bestimmt. Der Rückstand wurde zurück zum Mörser gegeben. Die ausgesiebten Fraktionen wurden mit Übergang 1, Übergang 2, Übergang 3 bezeichnet. Der Rückstand wurde in einem automatischen mechanischen Mörser unter hohem Vordruck behandelt und für weitere 10 min behandelt und anschließend durch ein Sieb abgesiebt. Die abgesiebte Fraktion wurde als Kern außen und der Rückstand als Kern innen bezeichnet. Bei den Tätigkeiten resultieren Verluste in Höhe von etwa 1,5 % relativ zu der eingesetzten Menge.

**Tabelle 1: Stickstoffgehalte und Siliciumgehalte gemäß Aufbau der Partikel.**

| | Gewichtsanteil [%] | Stickstoffgehalt, bezogen auf den Gewichtsanteil [Gew.-%] | Siliciumgehalt, bezogen auf den Gewichtsanteil [Gew.-%] |
|---|---|---|---|
| Erste Umhüllung | 1,5 | 30,7 | 69,0 |
| Zweite Umhüllung | 1,2 | 29,2 | 70,3 |
| Dritte Umhüllung | 0,8 | 27,6 | 72,0 |
| Übergang 1 | 4,3 | 18,7 | 81,1 |
| Übergang 2 | 8,2 | 12,8 | 86,8 |
| Übergang 3 | 10,3 | 11,4 | 88,2 |
| Kern außen | 16,4 | 9,2 | 90,5 |
| Kern innen | 55,8 | 6,6 | 93,2 |

Aus Tabelle 1 berechnen sich für die Deckschichten (erste, zweite und dritte Umhüllung), die Übergangsschichten (Übergang 1, 2 und 3) und die Kerne (Kern außen und innen) die in Tabelle 2 angegebenen Werte.

**Tabelle 2: Stickstoffgehalte und Siliciumgehalte der Deckschichten, der Übergangsschichten und der Kerne gemäß Aufbau der Partikel.**

| | Gewichtsanteil [%] | Stickstoffgehalt, bezogen auf den Gewichtsanteil [Gew.-%] | Siliciumgehalt, bezogen auf den Gewichtsanteil [Gew.-%] |
|---|---|---|---|
| Deckschicht | 3,5 | 29,4 | 70,0 |
| Übergangsschicht | 22,8 | 13,3 | 86,3 |
| Kern | 72,2 | 7,2 | 92,6 |

### Beispiel 2

### Herstellung azotiertes Silicium-haltiges Pulver

Gereinigtes metallurgisches Silicium (Verunreinigung je Metall kleiner 1.000 ppm, Summe Verunreinigung alle Metalle kleiner 5.000 ppm, Partikelgröße von 0,05 bis 1,0 mm; 8,5 kg) wurden in einem Hubherdofen in einer Schütthöhe von maximal 6 mm unter Argonatmosphäre auf 1.250 °C bei 1,08 bar Ar erhitzt. Sobald die Temperatur erreicht war, wurde Stickstoff zugefügt, bis ein Druck von 1,2 bar im Ofen erreicht war. Sobald der Druck im System auf 1,1 bar abgesunken war, wurde vom System wieder automatisch der Druck auf 1,2 bar mit Stickstoff erhöht. Nach 36 Stunden wurde der Hubherdofen ausgeschaltet und nach Abkühlen das Produkt entnommen. Das Produkt wurde im ersten Schritt grob vorgebrochen (Spaltbreite Brecher: 5 mm) und im zweiten Schritt mit einer Spaltbreite (1 mm) gebrochen. Aus dem erhaltenen Produkt wurde eine Fraktion 1 mit einer Partikelgröße kleiner 0,2 mm und eine Fraktion 2 mit einer Partikelgröße 0,2 bis 0,8 mm und eine Fraktion 3 mit einer Partikelgröße größer 0,8 mm ausgesiebt. 65 % von der erhaltenen Menge nach dem Brecher mit der Spaltbreite 1 mm befinden sich nach dem Sieben in Fraktion 2 wieder. Fraktion 2 wies einen Gesamt-Stickstoff-Gehalt von 5,3 % und einen Gesamt-Silicium-Gehalt von 93,7 % auf. Für die weiteren Versuche wurde Fraktion 2 verwendet. Der Sauerstoffgehalt betrug 0,4 %.

Die Bestimmung der Korngrößen, der Gehalte an Stickstoff und Silicium des erfindungsgemäßen Pulvers erfolgte entsprechend Beispiel 1.

200 g Material der Siebfraktion 0,2 bis 0,8 mm (entspricht Fraktion 2) wurde in eine Heubachapparatur gegeben und 195 min (15 min + 60 min + 120 min) bei 60 UPM behandelt. Das jeweils im Sammelbehälter abgetrennte Material entspricht der Deckschicht.

Der Rückstand aus der Heubachapparatur wurde in einem Mörser dreimal je 5 min behandelt und jeweils die Fraktion kleiner 0,16 mm ausgesiebt, gewogen und der Stickstoff-Gehalt bestimmt. Der Rückstand wurde zurück zum Mörser gegeben. Die ausgesiebten Fraktionen wurden vereinigt und entsprechen der Übergangsschicht. Der Rückstand entspricht dem Kern.

**Tabelle 3: Stickstoffgehalte und Siliciumgehalte der Deckschichten, der Übergangsschichten und der Kerne gemäß Aufbau der Partikel**

| | Gewichtsanteil [%] | Stickstoffgehalt, bezogen auf den Gewichtsanteil [Gew.-%] | Siliciumgehalt; bezogen auf den Gewichtsanteil [Gew.-%] |
|---|---|---|---|
| Deckschicht | 2,8 | 27,9 | 71,3 |
| Übergangsschicht | 20,7 | 10,4 | 89,4 |
| Kern | 75,1 | 2,8 | 96,9 |

## Patentansprüche

1. Azotiertes Silicium-haltiges Pulver umfassend Partikel, die jeweils aus einem Kern, einer Übergangsschicht, die den Kern zumindest teilweise überdeckt oder ummantelt, und einer Deckschicht, die die Übergangsschicht zumindest teilweise überdeckt oder ummantelt, bestehen, wobei die Partikel des Pulvers eine Partikelgröße von höchstens 3.000 µm aufweisen, **dadurch gekennzeichnet, dass** die Kerne einen Stickstoffgehalt von höchstens 10 Gew.-% (bezogen auf die Masse der Kerne), die Übergangsschichten einen Stickstoffgehalt von mehr als 10 und bis zu 25 Gew.-% (bezogen auf die Masse der Übergangsschichten) und die Deckschichten einen Stickstoffgehalt von mehr als 25 Gew.-% (bezogen auf die Masse der Deckschichten) aufweisen.

2. Azotiertes Silicium-haltiges Pulver nach Anspruch 1, **dadurch gekennzeichnet, dass** das Silicium-haltige Pulver einen Gesamtstickstoffgehalt von mindestens 2 Gew.-% aufweist.

3. Azotiertes Silicium-haltiges Pulver nach Anspruch 1 oder 2, **dadurch gekennzeichnet, dass** das Silicium-haltige Pulver einen Gesamt-Siliciumgehalt von mindestens 73 Gew.-% aufweist.

4. Azotiertes Silicium-haltiges Pulver nach Anspruch 1, **dadurch gekennzeichnet, dass** das Pulver 0 bis 20 Gew.-% Partikel mit einer Partikelgröße von weniger als 200 µm, 60 bis 100 Gew.-% Partikel mit einer Partikelgröße von 200 bis 800 µm und 0 bis 20 Gew.-% Partikel mit einer Partikelgröße von mehr als 800 µm umfasst (jeweils bezogen auf die Masse des Pulvers).

5. Azotiertes Silicium-haltiges Pulver nach mindestens einem der vorgenannten Ansprüche, **dadurch gekennzeichnet, dass** die Kerne einen Stickstoffgehalt von höchstens 8 Gew.-%, bevorzugt von höchstens 5 Gew.-% und noch mehr bevorzugt von höchstens 3 Gew.-% (bezogen auf die Masse der Kerne) und/ oder die Kerne einen Stickstoffgehalt von mindestens 0,1 Gew.-%, bevorzugt von mindestens 0,5 Gew.-%, bevorzugt von mindestens 1 Gew.-% und noch mehr bevorzugt von mindestens 2 Gew.-% (bezogen auf die Masse der Kerne) aufweisen.

6. Azotiertes Silicium-haltiges Pulver nach mindestens einem der vorgenannten Ansprüche, **dadurch gekennzeichnet, dass** die Kerne nicht aus Silicium bestehen.

7. Azotiertes Silicium-haltiges Pulver nach mindestens einem der vorgenannten Ansprüche, **dadurch gekennzeichnet, dass** die Deckschichten einen Stickstoffgehalt von mehr als 27 Gew.-%, bevorzugt von mehr als 32 Gew.-% und bevorzugt von mehr als 35 Gew.-% aufweisen (bezogen auf die Masse der Deckschichten) und/ oder die Deckschichten einen Stickstoffgehalt von höchstens 37 Gew.-% (bezogen auf die Masse der Deckschichten) aufweisen.

8. Azotiertes Silicium-haltiges Pulver nach mindestens einem der vorgenannten Ansprüche, **dadurch gekennzeichnet, dass** die Deckschichten nicht aus Siliciumnitrid bestehen.

9. Azotiertes Silicium-haltiges Pulver nach mindestens einem der vorgenannten Ansprüche, **dadurch gekennzeichnet, dass** die Übergangsschichten einen Stickstoffgehalt von mehr als 10 und bis zu 25 Gew.-% (bezogen auf die Masse der Übergangsschichten) aufweisen und der Stickstoffgehalt innerhalb der Übergangsschichten von innen nach außen graduell zunimmt.

10. Azotiertes Silicium-haltiges Pulver nach mindestens einem der vorgenannten Ansprüche, **dadurch gekennzeichnet, dass** die Übergangsschichten für Gase, insbesondere Stickstoff, diffusionsoffene Schichten und/ oder die Deckschichten für Gase, insbesondere Stickstoff, diffusionsoffene Schichten sind.

11. Azotiertes Silicium-haltiges Pulver nach mindestens einem der vorgenannten Ansprüche, **dadurch gekennzeichnet, dass** die Übergangsschichten die Kerne vollständig überdecken oder ummanteln und/ oder die Deckschichten die Übergangsschichten vollständig überdecken oder ummanteln.

12. Azotiertes Silicium-haltiges Pulver nach mindestens einem der vorgenannten Ansprüche, **dadurch gekennzeichnet, dass** der Sauerstoffgehalt in dem Pulver weniger als 2 Gew.-%, bevorzugt weniger als 1 Gew.-%, bevorzugt weniger als 0,5 Gew.-% (bezogen auf die Masse des Pulvers) beträgt.

13. Azotiertes Silicium-haltiges Pulver nach mindestens einem der vorgenannten Ansprüche, **dadurch gekennzeichnet, dass** das Pulver kein Siliciumdioxid, Siliciumoxinitrid, Siliciumcarbid oder Mischungen hiervon umfasst.

14. Azotiertes Silicium-haltiges Pulver nach Anspruch 1, **dadurch gekennzeichnet, dass** der Massenanteil der Kerne des Pulvers 10 bis 90 Gew.-%, bevorzugt 40 bis 75 Gew.-%, und/ oder der Massenanteil der Übergangsschichten des Pulvers 9,5 bis 89,5 Gew.-%, bevorzugt 24,5 bis 59,5 Gew.-%, und/ oder der Massenanteil der Deckschichten des Pulvers 0,5 bis 40 Gew.-%, bevorzugt 0,5 bis 5 Gew.-%, (jeweils bezogen auf die Masse des Pulvers) beträgt.

## Claims

1. Azotised silicon-containing powder comprising particles which each consist of a core, a transition layer that at least partially covers or encases the core, and a cover layer that at least partially covers or encases the transition layer, the particles of the powder having a particle size of at most 3,000 µm, **characterised in that** the cores have a nitrogen content of at most 10 wt.% (based on the mass of the cores), the transition layers have a nitrogen content of more than 10 and up to 25 wt.% (based on the mass of the transition layers) and the cover layers have a nitrogen content of more than 25 wt.% (based on the mass of the cover layers).

2. Azotised silicon-containing powder according to claim 1, **characterised in that** the silicon-containing powder has a total nitrogen content of at least 2 wt.%.

3. Azotised silicon-containing powder according to either claim 1 or claim 2, **characterised in that** the silicon-containing powder has a total silicon content of at least 73 wt.%.

4. Azotised silicon-containing powder according to claim 1, **characterised in that** the powder contains 0 to 20 wt.% of particles having a particle size of less than 200 µm, 60 to 100 wt.% of particles having a particle size of 200 to 800 µm and 0 to 20 wt.% of particles having a particle size of more than 800 µm (in each case based on the mass of the powder).

5. Azotised silicon-containing powder according to at least one of the preceding claims, **characterised in that** the cores have a nitrogen content of at most 8 wt.%, preferably at most 5 wt.% and even more preferably at most 3 wt.% (based on the mass of the cores) and/or the cores have a nitrogen content of at least 0.1 wt.%, preferably at least 0.5 wt.%, preferably at least 1 wt.% and even more preferably at least 2 wt.% (based on the mass of the cores).

6. Azotised silicon-containing powder according to at least one of the preceding claims, **characterised in that** the cores do not consist of silicon.

7. Azotised silicon-containing powder according to at least one of the preceding claims, **characterised in that** the cover layers have a nitrogen content of more than 27 wt.%, preferably more than 32 wt.% and more preferably more than 35 wt.% (based on the mass of the cover layers) and/or the cover layers have a nitrogen content of at most 37 wt.% (based on the mass of the cover layers).

8. Azotised silicon-containing powder according to at least one of the preceding claims, **characterised in that** the cover layers do not consist of silicon nitride.

9. Azotised silicon-containing powder according to at least one of the preceding claims, **characterised in that** the transition layers have a nitrogen content of more than 10 and up to 25 wt.% (based on the mass of the transitional layers) and the nitrogen content within the transition layers gradually increases from the inside to the outside.

10. Azotised silicon-containing powder according to at least one of the preceding claims, **characterised in that** the transition layers are layers open to diffusion for gases, in particular nitrogen, and/or the cover layers are layers open to diffusion for gases, in particular nitrogen.

11. Azotised silicon-containing powder according to at least one of the preceding claims, **characterised in that** the transition layers completely cover or encase the cores and/or the cover layers completely cover or encase the transition layers.

12. Azotised silicon-containing powder according to at least one of the preceding claims, **characterised in that** the oxygen content in the powder is less than 2 wt.%, preferably less than 1 wt.%, more preferably less than 0.5 wt.% (based on the mass of the powder).

13. Azotised silicon-containing powder according to at least one of the preceding claims, **characterised in that** the powder does not comprise silicon dioxide, silicon oxynitride, silicon carbide or mixtures thereof.

14. Azotised silicon-containing powder according to claim 1, **characterised in that** the mass fraction of the cores of the powder is 10 to 90 wt.%, preferably 40 to 75 wt.%, and/or the mass fraction of the transition layers of the powder is 9.5 to 89 5 wt.%, preferably 24.5 to 59.5 wt.%, and/or the mass fraction of the cover layers of the powder is 0.5 to 40 wt.%, preferably 0.5 to 5 wt.% (based on the mass of the powder).

## Revendications

1. Poudre azotée contenant du silicium comprenant des particules qui se composent chacune d'un noyau, d'une couche de transition qui recouvre ou enrobe au moins partiellement le noyau, et d'une couche de recouvrement qui recouvre ou enrobe au moins partiellement la couche de transition, les particules de la poudre présentant une taille de particule d'au plus 3000 µm, **caractérisée en ce que** les noyaux ont une teneur en azote d'au plus 10 % en poids (par rapport à la masse des noyaux), les couches de transition ont une teneur en azote supérieure à 10 et allant jusqu'à 25 % en poids (par rapport à la masse des couches de transition) et les couches de recouvrement ont une teneur en azote supérieure à 25 % en poids (par rapport à la masse des couches de recouvrement).

2. Poudre azotée contenant du silicium selon la revendication 1, **caractérisée en ce que** la poudre contenant du silicium présente une teneur totale en azote d'au moins 2 % en poids.

3. Poudre azotée contenant du silicium selon la revendication 1 ou 2, **caractérisée en ce que** la poudre contenant du silicium présente une teneur totale en silicium d'au moins 73 % en poids.

4. Poudre azotée contenant du silicium selon la revendication 1, **caractérisée en ce que** la poudre comprend de 0 à 20 % en poids de particules ayant une taille de particules inférieure à 200 µm, de 60 à 100 % en poids de particules ayant une taille de particules de 200 à 800 µm et de 0 à 20 % en poids de particules ayant une taille de particules supérieure à 800 µm (dans chaque cas par rapport à la masse de la poudre).

5. Poudre azotée contenant du silicium selon au moins l'une des revendications précédentes, **caractérisée en ce que** les noyaux présentent une teneur en azote d'au plus 8 % en poids, de préférence d'au plus 5 % en poids et encore plus préférentiellement d'au plus 3 % en poids (par rapport à la masse des noyaux) et/ou les noyaux présentent une teneur en azote d'au moins 0,1 % en poids, de préférence d'au moins 0,5 % en poids, de préférence d'au moins 1 % en poids et encore plus préférentiellement d'au moins 2 % en poids (par rapport à la masse des noyaux).

6. Poudre azotée contenant du silicium selon au moins l'une des revendications précédentes, **caractérisée en ce que** les noyaux ne sont pas constitués de silicium.

7. Poudre azotée contenant du silicium selon au moins l'une des revendications précédentes, **caractérisée en ce que** les couches de recouvrement présentent une teneur en azote supérieure à 27 % en poids, de préférence supérieure à 32 % en poids et de préférence supérieure à 35 % en poids (par rapport à la masse des couches de recouvrement) et/ou les couches de recouvrement présentent une teneur en azote d'au plus 37 % en poids (par rapport à la masse des couches de recouvrement).

8. Poudre azotée contenant du silicium selon au moins l'une des revendications susmentionnées, **caractérisée en ce que** les couches de recouvrement ne sont pas constituées de nitrure de silicium.

9. Poudre azotée contenant du silicium selon au moins l'une des revendications précédentes, **caractérisée en ce que** les couches de transition présentent une teneur en azote supérieure à 10 et allant jusqu'à 25 % en poids (par rapport à la masse des couches de transition) et **en ce que** la teneur en azote à l'intérieur des couches de transition augmente graduellement de l'intérieur vers l'extérieur.

10. Poudre azotée contenant du silicium selon au moins l'une des revendications précédentes, **caractérisée en ce que** les couches de transition pour les gaz, en particulier l'azote, sont des couches ouvertes à la diffusion et/ou les couches de recouvrement pour les gaz, en particulier l'azote, sont des couches ouvertes à la diffusion.

11. Poudre azotée contenant du silicium selon au moins l'une des revendications précédentes, **caractérisée en ce que** les couches de transition recouvrent ou enrobent complètement les noyaux et/ou les couches de recouvrement recouvrent ou enrobent complètement les couches de transition.

12. Poudre azotée contenant du silicium selon au moins l'une des revendications précédentes, **caractérisée en ce que** la teneur en oxygène dans la poudre est inférieure à 2 % en poids, de préférence inférieure à 1% en poids, de préférence inférieure à 0,5 % en poids (par rapport à la masse de la poudre).

13. Poudre azotée contenant du silicium selon au moins l'une des revendications précédentes, **caractérisée en ce que** la poudre ne comprend pas de dioxyde de silicium, d'oxynitrure de silicium, de carbure de silicium ou de mélanges de ceux-ci.

14. Poudre azotée contenant du silicium selon la revendication 1, **caractérisée en ce que** la proportion en masse des noyaux de la poudre est de 10 à 90 % en poids, de préférence de 40 à 75 % en poids, et/ou la proportion en masse des couches de transition de la poudre est de 9,5 à 89,5 % en poids, de préférence de 24,5 à 59,5 % en poids, et/ou la proportion en masse des couches de recouvrement de la poudre est de 0,5 à 40 % en poids, de préférence de 0,5 à 5 % en poids (dans chaque cas par rapport à la masse de la poudre).
